# EUROPEAN PATENT SPECIFICATION

(11) **EP 1 531 961 B1**
(45) Date of publication and mention of the grant of the patent: **05.03.2008**
(21) Application number: 03763888.9
(22) Date of filing: 17.07.2003
(51) Int. Cl.: B23K 13/02, B23K 13/04, B23K 13/06, B23K 13/00, B23K 20/00, B23K 20/02, B23K 20/14, B23K 33/00

(54) **FORGE WELDING OF HEAVY DUTY TUBULARS**
SCHMIEDESCHWEISSEN VON HOCHLEISTUNGSROHREN
SOUDAGE PAR FORGEAGE DE MATERIAUX TUBULAIRES LOURDS

(30) Priority: 17.07.2002 EP 02077913
(43) Date of publication of application: 25.05.2005
(73) Proprietor: SHELL INTERNATIONALE RESEARCH MAATSCHAPPIJ B.V., 2596 HR Den Haag (NL)
(72) Inventor: DEN BOER, Johannis, Josephus, NL-2288 GD Rijswijk (NL); COLE, Anthony, Thomas, NL-2288 GD Rijswijk (NL); DIMITRIADIS, Klisthenis, NL-2288 GD Rijswijk (NL); ZIJSLING, Djurre, Hans, NL-2288 GD Rijswijk (NL)
(86) International application number: PCT/EP2003/007790
(87) International publication number: WO 2004/007135

(56) References cited:
- WO-A-98/33619
- US-A- 2 604 569
- US-A- 4 566 625
- US-A- 4 728 760
- US-A- 4 736 084
- US-A- 5 721 413

## Description

The invention relates to an improved method for forge welding of heavy duty tubulars such that a welded connection of high strength and quality is obtained. Heavy duty tubulars may be formed by oilfield, well and/or other tubulars which are in use subject to high mechanical and/or thermal stresses as a result of their use in an irregular borehole or hostile on- or offshore environment. Thus the heavy duty tubulars may frequently be subject to large radial, tangential and/or shear stresses which cause a high elastic, plastic and/or pseudo plastic deformation of the tubular wall and any tubular joints. The heavy duty tubulars may be tubulars which are expanded downhole to a larger diameter and plastically deformed during the expansion process, drill pipes which may be 10 kilometers long and twisted over 30 times of the pipe circumference as a result of the torque transmitted to the drill bit and friction between the drill pipe and the irregular borehole wall or heater well casings, steam injection and/or other heater pipes which are subject to high thermal expansion and may be squeezed by the thermal expansion of the surrounding formation and/or subsidence during the production operations.

Forge welding involves circumferential heating of the pipe ends that are to be joined and subsequently pressing the pipe ends together to form a metallurgical bond.

A large variety of heating technologies may be used to make the pipe ends hot enough such that the metallurgical bond can be made. The heating techniques may involve electric, electromagnetic, induction, infrared, sparking and/or friction heating or combinations of these and other heating methods.

When used in this specification the term forge welding is intended to encompass all techniques which involve circumferential heating of pipe ends and subsequent metallurgical bonding the heated pipe ends, including welding techniques that are generally known as diffusion welding, friction welding, flash welding and/or butt welding.

US patent No. 2,604,569 discloses a butt welding technique wherein the ends of metallic members that one to be joined have sinusoidal shapes and are heated by passing low frequency or direct current longitudinally of the members.

It is known from US patents 4,736, 084; 4,669,650 and 5,721,413 issued to Per H. Moe that it may be beneficial to flush the pipe ends just before and during the forge welding operation with a reducing flushing gas, such as hydrogen or carbon monoxide, such that any oxygen skin is removed from the heated pipe ends and a metallurgical bond with a minimal amount of irregularities is obtained. It is also known from US patents 2,719,207 and 4,728,760 to use non explosive mixtures comprising about 95% by volume of a substantially insert gas, such as argon, nitrogen and/or helium, and about 5% by volume of a reducing gas, such as hydrogen and/or carbon monoxide for flash welding and induction butt welding.

US-A-4 736 084 discloses a method for heating tubular elements to be joined, especially by forge welding, whereby the surfaces to be welded constitute a narrow gap.

US-A-4 566 625 discloses a method of joining tubular elements by diffusion welding whereby the parts are heated, pressed together, and subsequently cooled.

US-A-2 604 569 discloses a method of joining elements by forge welding, whereby the ends of the elements have an intermeshing regular sinusoidal or teethed shape.

Experiments have shown that forge welding techniques are capable to generate high quality metallurgical bonds between the tubular ends, in particular if the pipe end are flushed with a reducing flush gas mixture during the welding operation.

It is an object of the invention to provide a method for forge welding of heavy duty well, oilfield and or other tubulars which is able to generate a forge welded tubular connection in within a few minutes only and which generates a weld at which the pipe wall in the region of the weld is weakened and/or stiffened only to a minimal extent and optionally such that only a gradual variation of any strength variation occurs in longitudinal direction of the tubulars.

### Summary of the Invention

In accordance with the invention there is provided an improved method of joining heavy duty tubulars, the method comprising:
joining the tubulars by forge welding and flushing a reducing flushing gas around the heated tubular ends during at least part of the forge welding operation such that oxides are removed from the forge welded tubular ends and the amount of oxide inclusions and irregularities between the forge welded tubular ends is limited characterized in that the tubular ends have an intermeshing regular complementary sinusoidal or teethed shape around the circumference of the tubulars;
the use of tubular ends which have in circumferential direction a complementary teethed sinusoidal shape alleviates forces to the forge welded tubular ends during use of the heavy duty tubular string. The intermeshing teethed or sinusoidal ends may be pressed against each other during the forge welding operation by moving the tubular ends in a longitudinal direction towards each other during the welding process, whilst the circumferential orientation of the tubular ends is controlled such that along the entire circumference a gap of a substantially constant width is present during the heat up phase.

The tubular ends may be heated by passing a high frequency current in circumferential direction through the tubular walls near the tubular ends that are to be joined and wherein the presence of cold spots along the circumference of the heated tubular ends is reduced by arranging a series of longitudinal ferrite bars around the outer surface of the tubular ends and/or within the interior thereof.

The flushing gas may be a non-explosive mixture of a substantially inert gas and a reducing gas, more in particular, the flushing gas comprises more than 90% by volume of a substantially inert gas, such as nitrogen, helium or argon and more than 2% by volume of hydrogen.

The heavy duty tubular string may be a casing while drilling string, which carries a drill bit while drilling the hole and which remains in the borehole in an expanded or unexpanded configuration after completion of the drilling process.

The tubulars may also be joined downhole by forge welding after a tube expansion operation wherein a spear is inserted into the region of the tubular ends which then heats the tubular end to a forge welding temperature and presses them together the spear flushes a reducing flushing gas around the heated tubular ends during at least part of the forge welding operation.

In such case the ends of the tubulars may at least partly overlap each other and the spear and or other forge welding device is inserted into the inner tubular which heats up the tubular end, flushes a reducing flushing gas into any gap remaining between the overlapping tubular ends and which subsequently presses the outer surface of the heated end of the inner tubular against the inner surface of the outer tubular to join said tubular ends by forge welding.

In such case the partially overlapping tubular ends are teethed or have a complementary sinusoidal shape in order to alleviate the presence of abrupt stress variations to the forge welded expanded tubular ends when the tubular string is bent, compressed and/or otherwise deformed.

### Description of Preferred Embodiments

The invention will be described in more detail and by way of example with reference to the accompanying drawings in which:
Fig. 1 shows two pipe ends with complementary teethed end faces. The teethed end faces can be used to align the tubulars in angular direction;
Fig. 2 show two pipe ends with complementary non-planar end-faces, which are in this case of a sinusoidal shape; and
Fig. 3 shows two partially overlapping pipe ends of which the end surfaces have a sinusoidal shape.

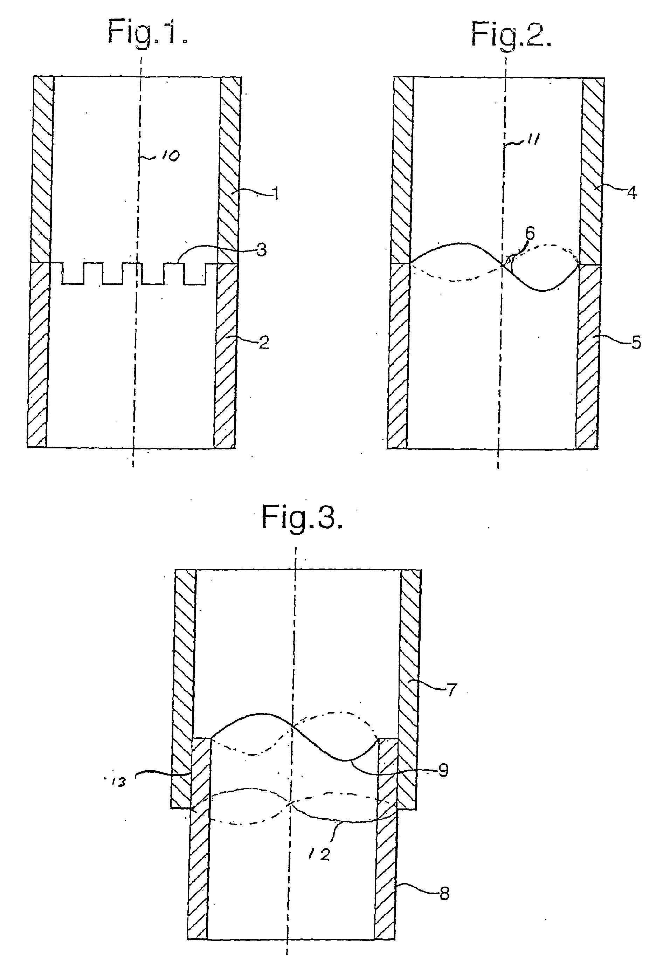

As illustrated in Fig. 1 welding of the teethed ends 3 of adjacent pipes 1,2 together along the length of the contour of the intermeshing non-planar teethed ends 3 which are rotation symmetrical relative to a longitudional axis 10 of the pipes 1,2 provides a total length of the weld which is larger than the total circumferential length of the pipes and thereby reduces the loading of the weld compared to that of the pipe body.

In Fig. 2 the non planar ends 6 of two adjacent pipe sections 4 and 5 have an in circumferential direction sinusoidal shape which is rotation symmetrical relative to a longitudional axis 11 of the pipe sections 4 and 5.

Fig. 3 shows two pipe ends 7 and 8 which are partly overlapping. The inner pipe end 8 is provided with a non-planar rotation symmetrical sinusoidal end face 9 which is in contact with the outer pipe 7, whereas the outer pipe 7 has a non-planar rotation symmetrical sinusoidal end face 12 which is in contact with the inner pipe 8. Welding of the pipes 7 and 8 together along the length of the overlapping pipe sections 13 between the non-planar end faces 9 and 12 yields a weld length which is larger than the length of the circumference of the pipes and thereby reduces the loading of the weld compared to that of the pipe bodies. In addition, this configuration yields a gradual transfer of the loading from one pipe body to the other pipe body and supports the mitigation of stress concentrations in the overlap zone of the pipes when the pipes are twisted by torsional forces and/or bent and/or radially expanded.

## Claims

1. A method of joining heavy duty tubulars, the method comprising joining the tubulars (1, 2, 4, 5, 7, 8) by forge welding and flushing a reducing flushing gas around the heated tubular ends (3, 6, 9, 12) during at least part of the forge welding such that oxides are removed from the forge welded tubular ends (3, 6, 9, 12) and the amount of oxide inclusions and irregularities between the forge welded tubular ends is limited, **characterized in that** the tubular ends (3, 6, 9, 12) have an intermeshing regular complementary sinusoidal or complementary teethed shape around the circumference of the tubulars.

2. The method of claim 1, wherein the flushing gas is a non-explosive mixture of a substantially inert gas and a reducing gas, such as a mixture comprising more than 90% by volume of a substantially inert gas, such as nitrogen, helium or argon and more than 2% by volume of hydrogen.

3. The method of claim 1 or 2, wherein the heavy duty tubular string is a casing while drilling string which carries a drill bit while drilling the hole and which remains in the borehole in an expanded or unexpanded configuration after completion of the drilling process.

4. The method of claim 1, wherein the tubular ends (3, 6, 9, 12) are heated by passing a high frequency current in circumferential direction through the tubular walls near the tubular ends (3, 6, 9, 12) that are to be joined and wherein the presence of cold spots along the circumference of the heated tubular ends is reduced by arranging a series of longitudinal ferrite bars around the outer surface of the tubular ends and/or within the interior thereof.

5. The method of claim 1, wherein the tubular ends (3, 6, 9, 12) are heated by passing high frequency electrical current through the tubular ends by means of a series of electrodes which are pressed against the inner and/of outer surface of the tubular ends adjacent to the tips of the teeth (3) and/or sinusoidal end faces (6, 9, 12).

6. The method of claim 1, wherein the tubulars are joined downhole by forge welding after a tube expansion operation and the tubular ends (3, 6, 9, 12) are heated to a forge welding temperature and pressed together whilst a reducing flushing gas is flushed around the heated tubular ends during at least part of the forge welding operation.

7. The method of claim 6, wherein the ends (9, 12) of the tubulars (7, 8) at least partly overlap each other and a forge welding device is inserted into the inner tubular (8) which heats up the tubular ends (9, 12), flushes a reducing flushing gas into any gap remaining between the overlapping tubular ends (9, 12) and which subsequently presses the outer surface of the heated end (9) of the inner tubular (8) against the inner surface of the outer tubular (7) to join said tubular ends by forge welding, and wherein the end surfaces (9, 12) of the partially overlapping tubular ends are teethed or have a complementary sinusoidal shape in order to alleviate forces to the forge welded expanded tubular ends.

## Patentansprüche

1. Verfahren zum Verbinden von Hochleistungsrohren, wobei das Verfahren das Verbinden der Rohre (1, 2, 4, 5, 7, 8) durch Schmiedeschweißen und Spülen eines reduzierenden Spülgases um die erhitzten Rohrenden (3, 6, 9, 12) während zumindest eines Teiles des Schmiedeschweißvorganges umfaßt, derart, daß Oxide von den schmiedegeschweißten Rohrenden (3, 6, 9, 12) entfernt werden und die Menge an Oxideinschlüssen und Unregelmäßigkeiten zwischen den schmiedegeschweißten Rohrenden begrenzt wird, **dadurch gekennzeichnet, daß** die Rohrenden (3, 6, 9, 12) eine ineinandergreifende regelmäßige komplementäre sinusförmige oder komplementäre zahnförmige Gestalt um den Umfang der Rohre haben.

2. Verfahren nach Anspruch 1, bei welchem das Spülgas ein nicht-explosives Gemisch eines im wesentlichen inerten Gases und eines reduzierenden Gases ist, wie ein Gemisch, das mehr als 90 Vol.-% eines im wesentlichen inerten Gases, wie Stickstoff, Helium oder Argon, und mehr als 2 Vol.-% Wasserstoff umfaßt.

3. Verfahren nach Anspruch 1 oder 2, bei welchem der Hochleistungsrohrstrang eine Auskleidung ist, während das Bohrgestänge während des Bohrens eines Loches einen Bohrmeißel trägt, wobei die Auskleidung in einem aufgeweiteten oder nicht-aufgeweiteten Zustand nach dem Beenden des Bohrvorganges in dem Bohrloch verbleibt.

4. Verfahren nach Anspruch 1, bei welchem die Rohrenden (3, 6, 9, 12) erhitzt werden, indem ein Hochfrequenzstrom in Umfangsrichtung durch die Rohrwände nahe den miteinander zu verbindenden Rohrenden (3, 6, 9, 12) geleitet wird, und bei welchem das Vorhandensein von kalten Stellen entlang des Umfanges der erhitzten Rohrenden durch Anordnung einer Reihe von längsgerichteten Ferritstäben um die Außenfläche der Rohrenden und/oder im Inneren desselben reduziert wird.

5. Verfahren nach Anspruch 1, bei welchem die Rohrenden (3, 6, 9, 12) erhitzt werden, indem ein elektrischer Hochfrequenzstrom durch die Rohrenden mittels einer Reihe von Elektroden geleitet wird, die gegen die Innenfläche und/ oder Außenfläche der Rohrenden nahe den Spitzen der Zähne (3) und/oder der sinusförmigen Endflächen (6, 9, 12) gepreßt werden.

6. Verfahren nach Anspruch 1, bei welchem die Rohrenden im Bohrloch durch Schmiedeschweißen verbunden werden, nachdem ein Rohraufweitungsvorgang stattgefunden hat, und die Rohrenden (3, 6, 9, 12) auf Schmiedeschweißtemperatur erhitzt und aneinandergepreßt werden, während ein reduzierendes Spülgas während zumindest eines Teiles des Schmiedeschweißvorganges um die erhitzten Rohrenden gespült wird.

7. Verfahren nach Anspruch 6, bei welchem die Enden (9, 12) der Rohre (7, 8) einander zumindest teilweise überlappen und eine Schmiedeschweißvorrichtung in das innere Rohr (8) eingesetzt wird, welche die Rohrenden (9, 12) erhitzt, während ein reduzierendes Spülgas in jeglichen Spalt gespült wird, der zwischen den überlappenden Rohrenden (9, 12) verbleibt, und welche nachfolgend die Außenfläche des erhitzten Endes (9) des inneren Rohres (8) gegen die Innenfläche des äußeren Rohres (7) preßt, um die Rohrenden durch Schmiedeschweißen zu verbinden, und wobei die Endflächen (9, 12) der teilweise überlappenden Rohrenden gezahnt sind oder eine komplementäre sinusförmige Gestalt haben, um die Kräfte, die zum Schmiedeschweißen der aufgeweiteten Rohrenden erforderlich sind, zu reduzieren.

## Revendications

1. Procédé d'assemblage d'éléments tubulaires robustes, le procédé consistant à assembler les éléments tubulaires (1, 2, 4, 5, 7, 8) par soudage par forgeage et à projeter un gaz de lavage réducteur autour des extrémités (3, 6, 9, 12) chauffées des éléments tubulaires pendant au moins une partie du soudage par forgeage afin que les oxydes soient éliminés des extrémités (3, 6, 9, 12) des éléments tubulaires soudés par forgeage et que la quantité d'inclusions d'oxyde et d'irrégularités entre les extrémités des éléments tubulaires soudés par forgeage soit limitée, **caractérisé en ce que** les extrémités (3, 6, 9, 12) des éléments tubulaires ont une forme sinusoïdale complémentaire ou dentelée complémentaire régulière engrenante autour de la circonférence des éléments tubulaires.

2. Procédé de la revendication 1, dans lequel le gaz de lavage est un mélange non explosif d'un gaz essentiellement inerte et d'un gaz réducteur, tel qu'un mélange comprenant plus de 90 % en volume d'un gaz essentiellement inerte, tel que de l'azote, de l'hélium ou de l'argon, et plus de 2% en volume d'hydrogène.

3. Procédé de la revendication 1 ou 2, dans lequel le train d'éléments tubulaires robustes est un tubage, pendant que le train de forage qui porte un trépan pendant le forage du trou reste dans le trou de forage dans une configuration expansée ou non expansée après achèvement du processus de forage.

4. Procédé de la revendication 1, dans lequel les extrémités (3, 6, 9, 12) des éléments tubulaires sont chauffées en faisant passer un courant haute fréquence dans la direction circonférentielle par les parois des éléments tubulaires proches des extrémités (3, 6, 9, 12) des éléments tubulaires qui sont assemblés et dans lequel la présence de points froids le long de la circonférence des extrémités chauffées des éléments tubulaires est réduite en disposant une série de barres de ferrite longitudinales autour de la surface extérieure des extrémités des éléments tubulaires et / ou à l'intérieur de celles-ci.

5. Procédé de la revendication 1, dans lequel les extrémités (3, 6, 9, 12) des éléments tubulaires sont chauffées en faisant passer un courant électrique haute fréquence par les extrémités des éléments tubulaires au moyen d'une série d'électrodes qui sont pressées contre la surface intérieure et/ou extérieure des extrémités des éléments tubulaires adjacente aux sommets des dents (3) et/ou des faces sinusoïdales des extrémités (6, 9, 12).

6. Procédé de la revendication 1, dans lequel les éléments tubulaires sont assemblés au fond du trou par soudage par forgeage après une opération d'expansion de tube et les extrémités (3, 6, 9, 12) des éléments tubulaires sont chauffées à une température de soudage par forgeage et pressées ensemble pendant qu'un gaz de lavage réducteur est projeté autour des extrémités chauffées des éléments tubulaires pendant au moins une partie de l'opération de soudage par forgeage.

7. Procédé de la revendication 6, dans lequel les extrémités (9, 12) des éléments tubulaires (7, 8) se chevauchent au moins en partie et un dispositif de soudage par forgeage est inséré dans l'élément tubulaire intérieur (8) qui chauffe les extrémités (9, 12) des éléments tubulaires, projette un gaz de lavage réducteur dans tout espace restant entre les extrémités (9, 12) des éléments tubulaires se chevauchant et qui presse ensuite la surface extérieure de l'extrémité chauffée (9) de l'élément tubulaire intérieur (8) contre la surface intérieure de l'élément tubulaire extérieur (7) pour assembler lesdites extrémités des éléments tubulaires par soudage par forgeage, et dans lequel les surfaces d'extrémité (9, 12) des extrémités des éléments tubulaires se chevauchant en partie sont dentelées ou ont une forme sinusoïdale complémentaire afin de réduire les forces sur les extrémités des éléments tubulaires expansées soudées par forgeage.
